# EUROPÄISCHE PATENTSCHRIFT

(11) **EP 4 524 448 B1**
(45) Veröffentlichungstag und Bekanntmachung des Hinweises auf die Patenterteilung: **04.11.2026**
(21) Anmeldenummer: 24197957.4
(22) Anmeldetag: 02.09.2024
(51) Int. Cl.: F16M 11/04, F16L 55/26, F16M 11/08, F16M 11/10, F16M 11/22, F16M 11/42, F16M 11/18, E03F 7/12, F16L 55/28, F16L 101/30, G03B 17/56

(54) **BEFESTIGUNGSVORRICHTUNG FÜR EINE KAMERA AN EINEM FAHRWAGEN EINES KANALINSPEKTIONSSYSTEMS**
FASTENING DEVICE FOR CAMERA ON A CARRIAGE OF A CHANNEL INSPECTION SYSTEM
DISPOSITIF DE FIXATION D'UNE CAMÉRA SUR UN CHARIOT D'UN SYSTÈME D'INSPECTION DE CANALISATIONS

(30) Priorität: 13.09.2023 DE 102023124722
(43) Veröffentlichungstag der Anmeldung: 19.03.2025
(73) Patentinhaber: iPEK International GmbH, 87477 Sulzberg (DE)
(72) Erfinder: Schwarz, Martin, 87439 Kempten (DE); Felder, Sebastian, 6992 Hirschegg (AT); Stoll, Alexander, 88179 Oberreute (DE)
(74) Vertreter: 2s-ip Schramm Schneider Bertagnoll Patent- und Rechtsanwälte Part mbB

(56) Entgegenhaltungen:
- CN-A- 116 222 521
- CN-U- 218 972 157
- CN-U- 219 221 650

## Beschreibung

### Gebiet der Erfindung

Die Erfindung betrifft eine Befestigungsvorrichtung zum lösbaren Befestigen einer Kamera an einem Fahrwagen eines Kanalinspektions- und/oder Wartungssystems sowie einen Fahrwagen eines Kanalinspektions- und/oder Wartungssystems mit einer Befestigungsvorrichtung zum lösbaren Befestigen einer Kamera an dem Fahrwagen.

### Hintergrund der Erfindung

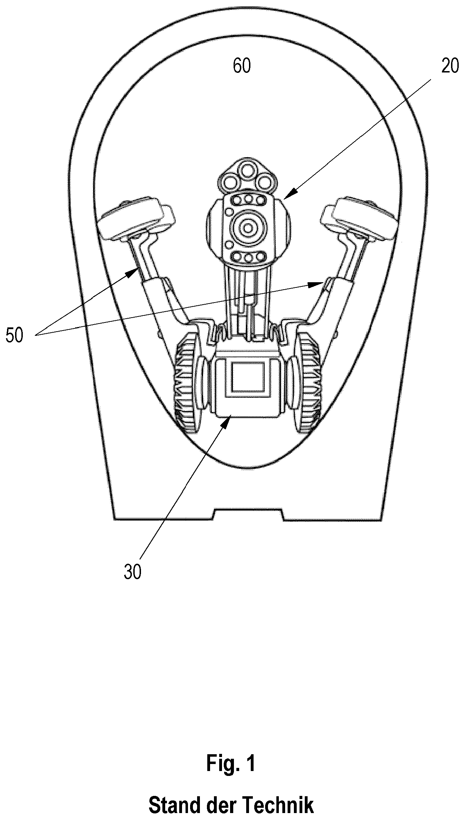

Bei der Inspektion von Kanälen, die eine sogenanntes Eiprofil aufweisen, besteht eine erhöhte Gefahr, dass Inspektionseinrichtungen, etwa ein Fahrwagen mit einer daran angeordneten Inspektionskamera seitlich kippen. Um ein Umkippen zu verhindern, ist es bekannt, den Fahrwagen mit einem sogenannten Eiprofiladapter auszustatten. Fig. 1 zeigt einen Kanal 60 der ein Eiprofil aufweist. In dem Kanal 60 befindet sich ein Fahrwagen 30, an dem ein Eiprofiladapter 50 angeordnet ist. Der Eiprofiladapter 50 weist nach links und nach rechts abstehende Arme auf, an dessen freien Enden sich Führungsräder befinden, die an der Innenwandung des Kanals aufliegen.

Solche Eiprofiladapter weisen allerdings mehrere Nachteile auf.

Die Eiprofiladapter sind konstruktiv aufwändig, da ein seitliches Ausfahren bzw. Ausschwenken der Arme möglich sein muss, um die Führungsräder an die Innenwandung des Kanals aufzulegen. Hierzu werden meist hydraulische Stellmittel verwendet. Die Eiprofiladapter weisen daher meist ein hohes Gewicht auf.

Die Führungsräder können beim Vorbeifahren an Seiteneinläufen des Kanals in diese Seiteneinläufe hineinragen. Der Schwerpunkt des gesamten Systems wird durch das hohe Gewicht des Eiprofiladapters deutlich nach oben verlagert und die seitlich ausladenden Arme mit den daran angeordneten Führungsräder haben zur Folge, dass das Gesamtsystem instabil wird. Beides kann aber das Eingreifen der Führungsräder in den Seiteinlauf deutlich begünstigen, da das Gesamtsystem deutlich leichter in Richtung des Seiteinlaufes kippen kann. Dadurch besteht die Gefahr, dass sich die Führungsräder in dem Seiteinlauf verhängen. Zudem droht beim Durchfahren eines Schachtdurchganges, der meist kein Eiprofil aufweist, ein Kippen des Systems aufgrund der durch den Eiprofiladapter begünstigten Instabilität. Die Eiprofiladapter sind meist an den verwendeten Fahrwagen angepasst, sodass für verschiedene Fahrwägen auch jeweils daran angepasste Eiprofiladapter vorgehalten werden müssen.

Im Stand der Technik sind bereits die Robotervorrichtung CN 218 972 157 U bekannt.

### Aufgabe der Erfindung

Aufgabe der vorliegenden Erfindung ist es daher, eine Lösung bereitzustellen, die die vorstehend genannten Nachteile vermeidet und dennoch eine sichere und einfache Inspektion von Kanälen, die ein Eiprofil aufweisen, ermöglicht.

### Erfindungsgemäße Lösung

Gelöst wird diese Aufgabe mit einer Befestigungsvorrichtung zum lösbaren Befestigen einer Kamera an einem Fahrwagen eines Kanalinspektions- und/oder Wartungssystems sowie mit einem Fahrwagen eines Kanalinspektions- und/oder Wartungssystems mit einer erfindungsgemäßen Befestigungsvorrichtung nach den unabhängigen Ansprüchen. Vorteilhafte Ausgestaltungen der Erfindung sind in den jeweiligen abhängigen Ansprüchen angegeben.

Bereitgestellt wird demnach eine Befestigungsvorrichtung zum lösbaren Befestigen eines Gerätes an einem Fahrwagen eines Kanalinspektions- und/oder Wartungssystems, wobei die Befestigungsvorrichtung eine Rückseite und eine Vorderseite aufweist, wobei die Befestigungsvorrichtung
- einen weitgehend senkrecht verlaufenden unteren Abschnitt,
- einen weitgehend senkrecht verlaufenden oberen Abschnitt, und
- einen schräg verlaufenden mittleren Abschnitt
   aufweist, wobei
- der mittlere Abschnitt den unteren Abschnitt mit dem oberen Abschnitt verbindet,
- der obere Abschnitt um einen vorbestimmten Versatz relativ zum unteren Abschnitt nach hinten oder nach vorne versetzt angeordnet ist,
- an der Rückseite und/oder an der Vorderseite des unteren Abschnitts ein erster Adapter angeordnet ist, mit dem die Befestigungsvorrichtung unmittelbar oder mittelbar an dem Fahrwagen lösbar befestigbar ist, und
- an der Vorderseite und/oder an der Rückseite des oberen Abschnitts ein zweiter Adapter angeordnet ist, an dem das Gerät lösbar an der Befestigungsvorrichtung befestigbar ist.

Unmittelbar an dem Fahrwagen lösbar befestigbar bedeutet, dass die Befestigungsvorrichtung direkt an dem Fahrwagen befestigt werden kann.

Mittelbar an dem Fahrwagen lösbar befestigbar bedeutet, dass zwischen der Befestigungsvorrichtung und dem Fahrwagen mindestens eine Einheit vorgesehen ist, die einerseits an dem Fahrwagen befestigt ist und an der andererseits die Befestigungsvorrichtung befestigt werden kann. Ein Beispiel für eine solche Einheit ist ein Hebearm, der an dem Fahrwagen (gegebenenfalls lösbar) befestigt ist, wobei an dem freien Ende des Hebearms die Befestigungsvorrichtung befestigbar ist.

Der weitgehend senkrecht verlaufende untere Abschnitt, der weitgehend senkrecht verlaufende obere Abschnitt und der schräg verlaufende mittlere Abschnitt bilden zusammen ein Grundgerüst.

Der erste Adapter und der zweite Adapter können jeweils Anschlüsse aufweisen, wobei die Anschlüsse des ersten Adapters zu den Anschlüssen des zweiten Adapters geführt sind.

Die Befestigungsvorrichtung aufweist mindestens zwei erste Stützstäbe, wobei
- der eine erste Stützstab an der linken Seite der Befestigungsvorrichtung über das Profil der Befestigungsvorrichtung hinausragt, und
- der andere erste Stützstab an der rechten Seite der Befestigungsvorrichtung über das Profil der Befestigungsvorrichtung hinausragt.

Die Befestigungsvorrichtung aufweist mindestens zwei zweite Stützstäbe, wobei
- der eine zweite Stützstab an der linken Seite der Befestigungsvorrichtung über das Profil der Befestigungsvorrichtung hinausragt, und
- der andere zweite Stützstab an der rechten Seite der Befestigungsvorrichtung über das Profil der Befestigungsvorrichtung hinausragt.

Die zweiten Stützstäbe sind jeweils in einem vorbestimmten vertikalen Abstand unterhalb der ersten Stützstäbe an der Befestigungsvorrichtung angeordnet.

Die zweiten Stützstäbe ragen weniger weit über das Profil der Befestigungsvorrichtung hinaus als die ersten Stützstäbe

Die ersten und die zweiten Stützstäbe sind in einem bestimmten horizontalen Versatz zueinander angeordnet.

Die ersten Stützstäbe und/oder die zweiten Stützstäbe können biegsam ausgestaltet sein und eine vorbestimmte Rückstellkraft aufweisen.

Die Befestigungsvorrichtung kann in einer Leichtbauweise hergestellt sein.

Der zweite Adapter kann um eine Schwenkachse von der Vorderseite zur Rückseite des oberen Abschnitts geschwenkt werden kann, vorzugsweise um mindestens 180°. Die Schwenkachse kann eine vertikale Achse oder Querachse sein. Vorteilhaft ist es, wenn der Schwenkachse ein steuerbares Stellmittel zugeordnet ist, mit dem der zweite Adapter geschwenkt werden kann.

Das Gerät kann eine Inspektionseinheit, insbesondere eine Inspektionskamera umfassen.

Bereitgestellt wird ferner ein Fahrwagen eines Kanalinspektions- und/oder Wartungssystems mit einer unmittelbar oder mittelbar an dem Fahrwagen lösbar befestigten erfindungsgemäßen Befestigungsvorrichtung.

Der Fahrwagen kann eine Anschlusseinheit aufweisen, die mit dem ersten Adapter der Befestigungsvorrichtung korrespondiert, um die Befestigungsvorrichtung an der Anschlusseinheit lösbar zu befestigen.

Alternativ oder zusätzlich kann der Fahrwagen eine Hebeeinheit aufweisen, an dessen freien Ende ein Anschlussmodul vorgesehen ist, das mit dem ersten Adapter der Befestigungsvorrichtung korrespondiert, um die Befestigungsvorrichtung an dem Anschlussmodul lösbar zu befestigen.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein System aus dem Stand der Technik mit einem Eiprofiladapter;
- Fig. 2: eine erfindungsgemäße Befestigungsvorrichtung zum lösbaren Befestigen einer Kamera an einem Fahrwagen in einer perspektivischen Ansicht;
- Fig. 3: die in Fig. 2 gezeigte Befestigungsvorrichtung in einer Seitenansicht, in einer Draufsicht und in einer Ansicht von vorne;
- Fig. 4: eine alternative Ausgestaltung einer erfindungsgemäßen Befestigungsvorrichtung in einer Seitenansicht;
- Fig. 5: eine erfindungsgemäße Befestigungsvorrichtung mit einer ersten Möglichkeit der Befestigung an einem Fahrwagen;
- Fig. 6: eine erfindungsgemäße Befestigungsvorrichtung mit einer zweiten Möglichkeit der Befestigung an einem Fahrwagen; und
- Fig. 7: eine erfindungsgemäße Befestigungsvorrichtung mit einer Möglichkeit der Befestigung an einer Hebeeinrichtung eines Fahrwagens.

### Detaillierte Beschreibung der Erfindung

Die erfindungsgemäße Befestigungsvorrichtung zum lösbaren Befestigen einer Kamera an einem Fahrwagen eines Kanalinspektions- und/oder Wartungssystems kann in vorteilhafter Weise zur Inspektion von Kanälen verwendet werden, die ein Eiprofil aufweisen. Die Inspektion wird zudem erheblich vereinfacht.

Die Form der Befestigungsvorrichtung gegebenenfalls in Kombination mit einer Leichtbauweise gewährleistet, dass der Schwerpunkt des Kanalinspektions- und/oder Wartungssystems im Vergleich zu einem Kanalinspektions- und/oder Wartungssystem ohne eine erfindungsgemäße Befestigungsvorrichtung nicht wesentlich verändert wird. Das bedeutet, dass die Stabilität des Kanalinspektions- und/oder Wartungssystems durch die Befestigungsvorrichtung nicht negativ beeinflusst wird.

Die Verwendung einer erfindungsgemäßen Befestigungsvorrichtung macht zudem die Verwendung eines herkömmlichen Eiprofiladapters überflüssig, wobei dennoch effektiv das Umkippen des Systems verhindert wird, einerseits durch den niedrigen Schwerpunkt und andererseits durch Verwendung von biegsamen bzw. flexiblen Stützstäben.

Die Stützstäbe weisen zudem den Vorteil auf, dass sie sich bei einem Eingreifen in einen Seiteinlauf des Kanals dort nicht verhaken. Zudem können die Stützstäbe lösbar und damit austauschbar ausgestaltet sein, sodass die Dimensionen der Stützstäbe einfach an die Dimensionen des zu inspizierenden Kanals angepasst werden kann.

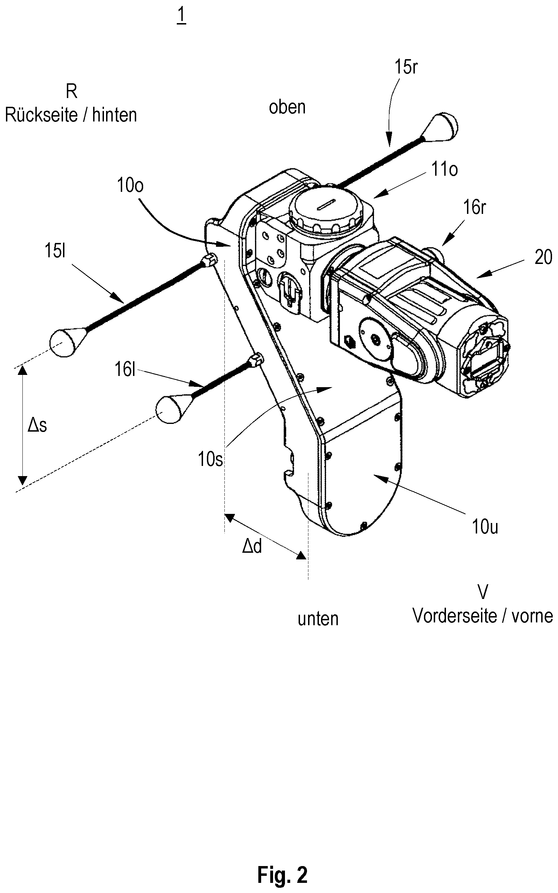

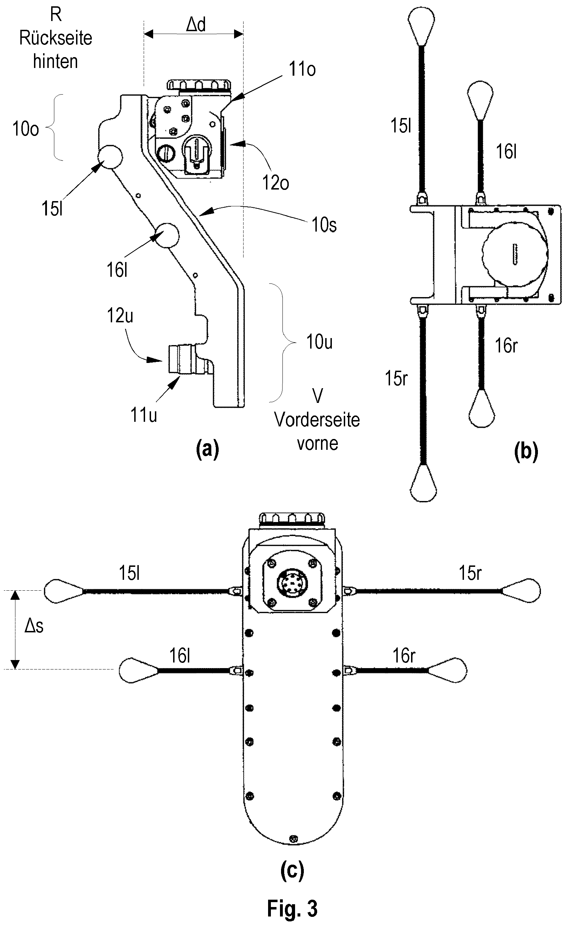

**Fig. 2** und **Fig. 3** zeigen eine erfindungsgemäße Befestigungsvorrichtung 1 zum lösbaren Befestigen einer Kamera20 an einem (hier nicht gezeigten) Fahrwagen, wobei in Fig. 2 die Befestigungsvorrichtung in einer perspektivischen Ansicht und in Fig. 3 in einer Seitenansicht (Abbildung (a)), in einer Draufsicht (Abbildung (b)) und in einer Ansicht von vorne (Abbildung (c)) gezeigt ist.

Die Befestigungsvorrichtung 1 weist eine Rückseite R und eine Vorderseite V auf und umfasst im Wesentlichen drei Abschnitte, die ein Grundgerüst der Befestigungsvorrichtung bilden, nämlich
- einen weitgehend senkrecht verlaufenden unteren Abschnitt 10u,
- einen weitgehend senkrecht verlaufenden oberen Abschnitt 10o, und
- einen schräg verlaufenden mittleren Abschnitt 10s.
wobei der mittlere Abschnitt 10s den unteren Abschnitt 10u mit dem oberen Abschnitt 10o verbindet.

Alle drei Abschnitte und damit das Grundgerüst können in einer Leichtbauweise hergestellt sein. Beispielsweise kann das Grundgerüst einen gerippeartigen, wabenförmigen und/oder gitterförmigen Aufbau aufweisen, wobei der Aufbau so gewählt ist, die benötigte Stabilität und Festigkeit eingehalten werden. Hinsichtlich der Materialien können Leichtbauwerkstoffe verwendet werden, etwa ein faserverstärkter Kunststoff, wie kohlenstofffaserverstärkter Kunststoff oder glasfaserverstärkter Kunststoff. Dadurch wird der Schwerpunkt des Systems, an dem die Befestigungsvorrichtung verwendet wird, durch die Befestigungsvorrichtung nicht oder nur unwesentlich verändert, sodass die Befestigungsvorrichtung nahezu keinen oder nur einen vernachlässigbar kleinen Einfluss auf die Stabilität des Kanalinspektions- und/oder Wartungssystems in dem Kanal hat. Zudem können die Antriebseinheiten des Fahrwagens geschont werden, da mit der erfindungsgemäßen Befestigungsvorrichtung nur ein sehr geringes zusätzlichen Gewicht mitgeführt werden muss.

An der Rückseite R des unteren Abschnitts 10u ist ein erster Adapter 11u vorgesehen bzw. angeordnet, mit dem die Befestigungsvorrichtung an dem Fahrwagen 30 oder an einer Hebeeinrichtung des Fahrwagens lösbar befestigbar ist. Der erste Adapter 11u ist hierbei vorzugsweise so ausgestaltet, dass die Befestigungsvorrichtung werkzeuglos an dem Fahrwagen bzw. an der Hebeeinrichtung befestigt und werkzeuglos von dem Fahrwagen bzw. von der Hebeeinrichtung gelöst werden kann.

In einer Ausgestaltung der Erfindung kann alternativ an der Vorderseite V des unteren Abschnitts 10u ein erster Adapter 11u vorgesehen bzw. angeordnet sein.

In einer weiteren Ausgestaltung der Erfindung können sowohl an der Rückseite R als auch an der Vorderseite V des unteren Abschnitts 10u jeweils ein erster Adapter 11u vorgesehen bzw. angeordnet sein. Dadurch kann die Flexibilität hinsichtlich der Befestigung an einem Fahrwagen erhöht werden.

An der Vorderseite V des oberen Abschnitts 10o ist ein zweiter Adapter 11o angeordnet ist, an dem eine Inspektionseinheit, insbesondere eine Kamera 20 lösbar an der Befestigungsvorrichtung befestigbar ist. Auch hier ist der zweite Adapter 11o vorzugsweise so ausgestaltet, dass die Inspektionseinheit werkzeuglos an der Befestigungsvorrichtung befestigt und werkzeuglos von der Befestigungsvorrichtung gelöst werden kann.

Alternativ kann der zweite Adapter 11o auch an der Rückseite R des oberen Abschnittes 10o angeordnet sein.

In einer weiteren Ausgestaltung der Erfindung können sowohl an der Rückseite R als auch an der Vorderseite V des oberen Abschnitts 10o jeweils ein zweiter Adapter 11o vorgesehen bzw. angeordnet sein. Dadurch kann die Flexibilität hinsichtlich der Befestigung einer Inspektionseinheit an der Befestigungsvorrichtung erhöht werden.

Der obere Abschnitt 10o ist um einen vorbestimmten Versatz Δd relativ zum unteren Abschnitt 10u nach hinten versetzt angeordnet. Alternativ kann der obere Abschnitt 10o um einen vorbestimmten Versatz Δd relativ zum unteren Abschnitt 10u nach vorne versetzt angeordnet sein. Die Richtung des Versatzes hängt im Wesentlichen von den konkreten Anforderungen ab, insbesondere von der gewünschten horizontalen Position der Inspektionseinheit relativ zum Fahrwagen.

Der erste Adapter 11u und der zweite Adapter 11o weisen jeweils Anschlüsse 12u, 12o auf, wobei die Anschlüsse 12u des ersten Adapters 11u zu den Anschlüssen 12o des zweiten Adapters 11o geführt sind, etwa mittels elektrischer Leitungen. Diese Leitungen können im Grundgerüst, vorzugsweise in einem geschlossenen Kanal des Grundgerüsts verlaufen bzw. angeordnet sein. Die Anschlüsse des ersten Adapter 11u entsprechen dabei den Anschlüssen des zweiten Adapters 11o.

In einer Ausgestaltung der Erfindung weist die Befestigungsvorrichtung zwei erste Stützstäbe 151, 15r auf, wobei diese Stützstäbe an dem Grundgerüst angeordnet sind. Die ersten Stützstäbe können lösbar (etwa mittels Schraubmittel) an dem Grundgerüst befestigt sein, sodass diese bei Bedarf abgenommen oder durch andere Stützstäbe ersetzt werden können.

Der eine erste Stützstab (151) ist so an dem Grundgerüst bzw. an der Befestigungsvorrichtung angeordnet, dass er über das Profil der Befestigungsvorrichtung hinausragt (wie insbesondere in Abbildung (c) der Fig. 3 gut erkennbar ist). Der andere erste Stützstab (15r) ist so an dem Grundgerüst bzw. an der Befestigungsvorrichtung angeordnet, dass er über das Profil der Befestigungsvorrichtung hinausragt (wie insbesondere in Abbildung (c) der Fig. 3 gut erkennbar ist). Gemäß einer Ausgestaltung der Erfindung können die ersten Stützstäbe (151, 15r) jeweils an der linken bzw. rechten Seite des Grundträgers befestigt sein.

Die Dimension der ersten Stützstäbe 151, 15r ist so gewählt, dass sie jeweils seitlich über den Fahrwagen, an dem die Befestigungsvorrichtung befestigt ist, hinausragen. In einem eiprofilförmigen Kanal ragen die freien Enden der ersten Stützstäbe 151, 15r so bis nahe an die Innenwandung des Kanals heran oder berühren Innenwandung des Kanals auf. Ein Kippen des Inspektionssystems in einem eiprofilförmigen Kanal kann so verhindert werden. Abhängig von den Dimensionen des eiprofilförmigen Kanals können kürzere oder längere erste Stützstäbe 151, 15r verwendet werden.

Die Befestigungsvorrichtung kann, wie in der Ausgestaltung nach Fig. 2 und Fig. 3, zwei zweite Stützstäbe 161; 16r aufweisen. Der eine zweite Stützstab 161 ist so an der Befestigungsvorrichtung angeordnet, dass er an der linken Seite der Befestigungsvorrichtung über das Profil der Befestigungsvorrichtung hinausragt. Der andere zweite Stützstab 16r ist so an der Befestigungsvorrichtung angeordnet, dass er an der rechten Seite der Befestigungsvorrichtung über das Profil der Befestigungsvorrichtung hinausragt. Mit den zweiten Stützstäben 161; 16r kann in Kombination mit den ersten Stützstäben 15l 15r ein Umkippen des Inspektionssystems in einem eiprofilförmigen Kanal noch besser verhindert werden.

Die zweiten Stützstäbe 161; 16r sind hierbei jeweils in einem vorbestimmten vertikalen Abstand Δs unterhalb der ersten Stützstäbe 151; 15r (d.h. unterhalb des jeweiligen ersten Stützstabes) an der Befestigungsvorrichtung angeordnet. Hierbei kann es vorteilhaft sein, wenn die zweiten Stützstäbe 161, 16r weniger weit über das Profil der Befestigungsvorrichtung hinausragen als die ersten Stützstäbe 151, 15r. In einem eiprofilförmigen Kanal ragen die weiter unten angeordneten zweiten Stützstäbe so im Wesentlichen gleich weit an die Innenwandung des Kanals heran wie die beiden weiter oben angeordneten ersten Stützstäbe.

Wie weit die jeweiligen Stützstäbe über das Profil der Befestigungsvorrichtung hinausragen, kann im einfachsten Fall durch die Länge der Stützstäbe festgelegt werden.

Bei der in Fig. 2 und Fig. 3 gezeigten Ausgestaltung der Erfindung sind die beiden ersten Stützstäbe am Übergang vom mittleren Abschnitt 10s zum oberen Abschnitt 10o angeordnet, die beiden zweiten Stützstäbe sind unterhalb davon am mittleren Abschnitt 10s angeordnet. Damit sind die ersten Stützstäbe und die zweiten Stützstäbe in einem bestimmten horizontalen Versatz zueinander angeordnet, was hinsichtlich der Kippsicherheit vorteilhaft sein kann, da damit ein Drehmoment um eine Hochachse des Systems während des Kippens weitestgehend vermieden werden kann.

Die ersten Stützstäbe 151, 15r und/oder die zweiten Stützstäbe 161, 16r sind biegsam ausgestaltet und weisen vorteilhafterweise eine vorbestimmte Rückstellkraft auf. Beispielsweise können die Stützstäbe einen flexiblen Kunststoff aufweisen, der eine gewisse Biegung der Stützstäbe erlaubt, ohne dass diese brechen. Weist beispielsweise die Innenwandung des Kanals ein Hindernis auf (etwa eine Ablagerung) kann ein Stützstab beim Vorbeifahren nachgeben und das Hindernis überwinden, ohne dass der Fahrwagen geneigt wird. Nach Überwindung des Hindernisses kann sich der Stützstab wieder gerade ausrichten.

Die Stützstäbe weisen hier an ihren freien Enden jeweils ein knaufartiges Endstück auf, dass vorzugsweise aus einem abriebfesten Kunststoff besteht. Damit kann gewährleistet werden, dass die Stützstäbe bei einer Berührung der Innenwandung des Kanals über die Innenwandung gleiten, ohne sich zu verhaken. Vorzugsweise die Endstücke lösbar an dem jeweiligen Stützstab befestigt.

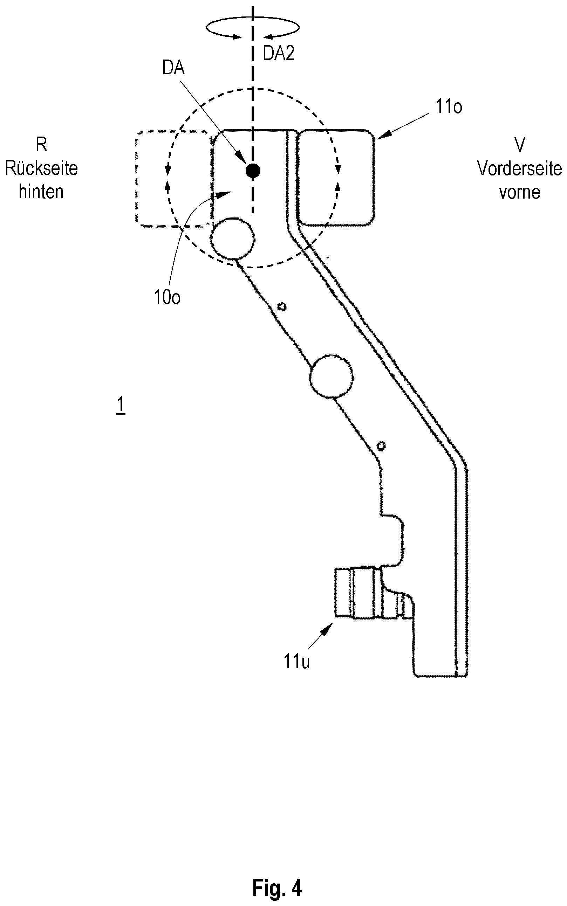

**Fig. 4** zeigt eine alternative Ausgestaltung einer erfindungsgemäßen Befestigungsvorrichtung 1 in einer Seitenansicht.

Am oberen Abschnitt 10o ist an der Vorderseite V der zweite Adapter 11o angeordnet. Dieser Adapter 11o ist um eine Drehachse DA, die quer zur Befestigungsvorrichtung verläuft, von der Vorderseite V zur Rückseite R des oberen Abschnitts 10o schwenkbar, wobei der Schwenkwinkel vorzugsweise mindestens 180° beträgt. Dadurch kann eine Inspektionseinheit, etwa eine Kamera, wenn der Adapter 11o an der Vorderseite angeordnet ist als nach vorne gerichtete Inspektionseinheit verwendet werden. Dieselbe Inspektionseinheit kann aber auch als nach hinten gerichtete Inspektionseinheit verwendet werden, wenn der Adapter 11o um 180° nach hinten, d.h. zur Rückseite R geschwenkt wird. Ein und dieselbe Kamera kann so wahlweise als Rückfahrkamera oder als normale Frontkamera verwendet werden.

Der zweite Adapter 11o kann nach oben zur Rückseite R geschwenkt werden. Möglich ist es aber auch, den zweiten Adapter 11o nach unten zur Rückseite R zu schwenken, wenn der obere Abschnitt 10o und gegebenenfalls auch der mittlere Abschnitt 10s entsprechend ausgestaltet sind, um ein Hindurchschwenken zu ermöglichen.

Alternativ kann der zweite Adapter 11o auch um eine vertikale Drehachse DA2 von der Vorderseite V zur Rückseite R des oberen Abschnitts 10o schwenkbar sein, wobei der Schwenkwinkel auch hier vorzugsweise mindestens 180° beträgt.

In einer weiteren, hier nicht gezeigten Ausgestaltung der erfindungsgemäßen Befestigungsvorrichtung 1 kann der obere Abschnitt 10o relativ zum mittleren Abschnitt 10s drehbar sein, vorzugswiese um die vertikale Drehachse DA2.

Vorteilhaft ist es, wenn der Drehachse DA bzw. der vertikalen Drehachse DA2 ein steuerbares Stellmittel zugeordnet ist, mit dem der Schwenkvorgang bewerkstelligt werden kann. Das steuerbare Stellmittel kann mit einer Steuereinheit des Fahrwagens gekoppelt sein, wobei die Versorgung des Stellmittels mit elektrischer Energie und gegebenenfalls eine Datenübertragung zwischen der Steuereinheit und dem Stellmittel über Storm- und Datenleitungen abgewickelt werden können, die von dem ersten Adapter 11u zum zweiten Adapter 11o geführt sind.

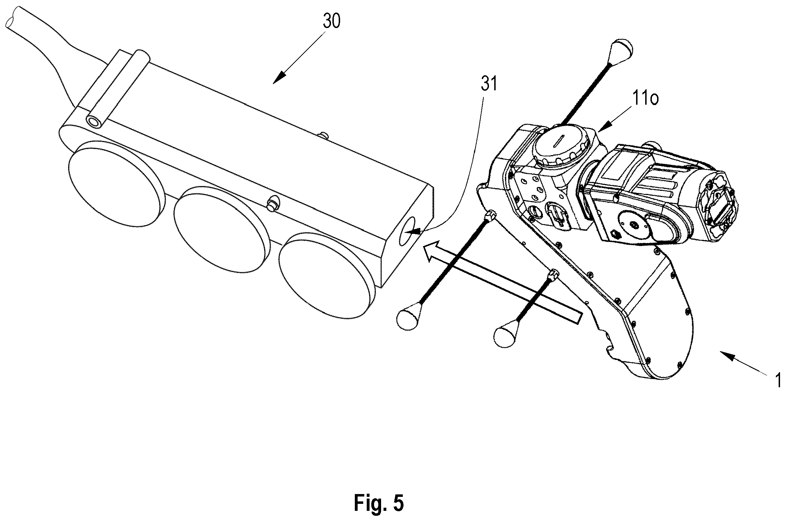

**Fig. 5** zeigt eine erfindungsgemäße Befestigungsvorrichtung 1 mit einer ersten Möglichkeit der Befestigung an einem Fahrwagen 30.

Der Fahrwagen 30 weist an seiner Vorderseite eine Anschlusseinheit 31 auf, die mit dem ersten Adapter 11u der Befestigungsvorrichtung 1 korrespondiert und an der der Adapter 11u angeschlossen werden kann. Über die Anschlusseinheit 31 und dem ersten Adapter 11u sind die Anschlüsse der Anschlusseinheit 31 mit dem zweiten Adapter 11o gekoppelt.

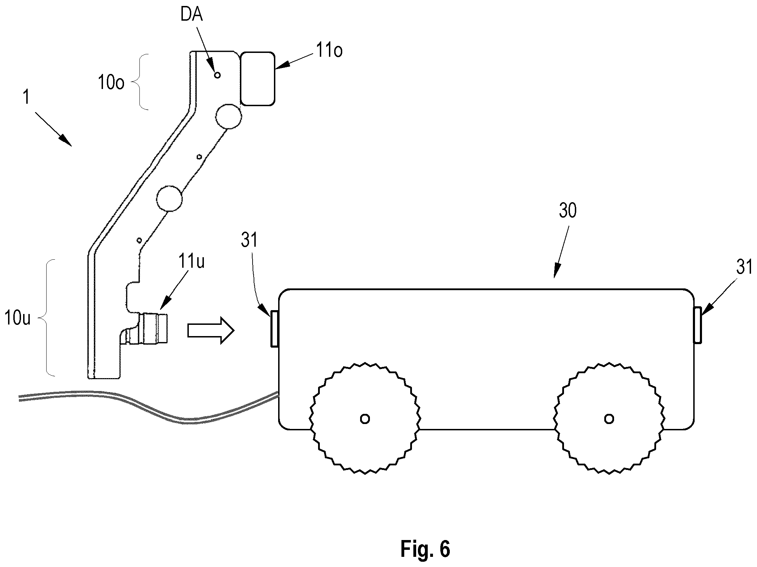

**Fig. 6** zeigt eine erfindungsgemäße Befestigungsvorrichtung 1 mit einer zweiten Möglichkeit der Befestigung an einem Fahrwagen 30.

Der Fahrwagen 30 weist hier an seiner Rückseite eine Anschlusseinheit 31 auf, die mit dem ersten Adapter 11u der Befestigungsvorrichtung 1 korrespondiert und an der der erste Adapter 11u angeschlossen werden kann. Im Unterscheid zu der in Fig. 5 gezeigten Ausgestaltung, ist der zweite Adapter 11o hier nicht an der Rückseite des oberen Abschnitts 10o angeordnet, sondern an der Vorderseite des oberen Abschnittes 10o, sodass eine an dem zweiten Adapter 11o angeschlossene Kamera als Frontkamera verwendet werden kann, obwohl die Befestigungsvorrichtung an dem hinteren Ende des Fahrwagens befestigt ist. Optional kann der zweite Adapter 11o, wie mit Bezug auf Fig. 4 beschrieben, auch schwenkbar um eine Drehachse DA bzw. um eine vertikale Drehachse DA2 sein.

Der Fahrwagen 30 kann auch an seiner Vorderseite eine Anschlusseinheit 31 aufweisen, sodass die Befestigungsvorrichtung 1 bei Bedarf auch dort angeschlossen werden kann.

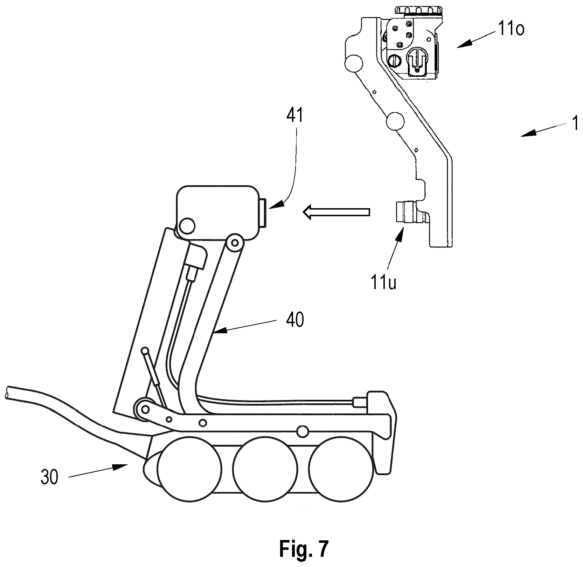

**Fig. 7** zeigt eine erfindungsgemäße Befestigungsvorrichtung 1 mit einer Möglichkeit der Befestigung an einer Hebeeinrichtung 40 eines Fahrwagens 30.

Die Hebeeinrichtung 40 ist hier als Hebearm ausgestaltet, der um eine Drehachse nach oben ausgelenkt werden kann. An dem freien Ende des Hebearms 40 ist ein Anschlussmodul 41 angeordnet, an dem die Befestigungsvorrichtung 1 mit ihrem ersten Adapter 11u angeschlossen werden kann. Die Anschlüsse des Anschlussmoduls 41 korrespondieren mit den Anschlüssen 12u des ersten Adapters 11u.

Auch bei Verwendung der Befestigungsvorrichtung 1 an einer Hebeeinrichtung 40 kann der zweite Adapter 11o um eine Drehachse DA bzw. um eine vertikale Drehachse DA2 schwenkbar sein. Zudem kann auch hier der erste Adapter 11u anstatt an der Rückseite R des unteren Abschnittes 1u an der Vorderseite V des unteren Abschnittes 11u angeordnet sein. Gleiches gilt für den an der Vorderseite V des oberen Abschnittes 10o angeordneten zweiten Adapters 11o, sofern der zweite Adapter 11o nicht schwenkbar ist.

Die Verwendung an einer Hebeeinrichtung 40 hat den Vorteil, dass einen an der Befestigungsvorrichtung 1 angeordnete Kamera auf eine gewünschte Höhe im Kanal gebracht werden kann (etwa im Kanal zentriert werden kann). Die Längen der ersten Stützstäbe 151, 15r und gegebenenfalls der zweiten Stützstäbe 161, 16r können so gewählt werden, dass diese optimal für die Verwendung bei einer zentrierten Kamera sind. Das bedeutet, die Stützstäbe reichen bei einer zentriert im Kanal angeordneten Kamera jeweils an die Kanalinnenwandung heran. Dennoch kann der Hebearm 40 und damit auch die daran angeordnete Befestigungsvorrichtung 1 bei Bedarf abgesenkt werden, da die Stützstäbe eine gewisse Flexibilität aufweisen und sich dann gegebenenfalls nach oben biegen können.

### Bezugszeichen

- 1: Befestigungsvorrichtung
- 10o: senkrecht verlaufender oberer Abschnitt der Befestigungsvorrichtung 1
- 10s: schräg verlaufender mittlerer Abschnitt der Befestigungsvorrichtung 1
- 10u: senkrecht verlaufender unterer Abschnitt der Befestigungsvorrichtung 1
- 11o: zweiter Adapter
- 11u: erster Adapter
- 12o: Anschlüsse (Stifte/Pins bzw. Buchsen) des zweiten Adapters 11o
- 12u: Anschlüsse (Stifte/Pins bzw. Buchsen) des ersten Adapters 11u
- 151: erster Stützstab (links)
- 15r: erster Stützstab (rechts)
- 161: zweiter Stützstab (links)
- 16r: zweiter Stützstab (rechts)
- 20: Gerät, z.B. eine Kamera
- 30: Fahrwagen
- 31: Anschlusseinheit des Fahrwagens 30
- 40: Hebeeinheit des Fahrwagens 30
- 41: Anschlussmodul am freien Ende der Hebeeinheit 40
- 50: Eiprofiladapter (Stand der Technik)
- 60: Rohr bzw. Kanal mit einem Eiprofil
- DA: Drehachse (Querachse)
- DA2: vertikal Drehachse
- R: Rückseite der Befestigungsvorrichtung 1
- V: Vorderseite der Befestigungsvorrichtung 1
- Δd: Versatz zwischen dem oberen Abschnitt 10o und dem unteren Abschnitt 10u
- Δs: vertikaler Abstand zwischen dem ersten Stützstab 151, 15r und dem zweiten Stützstab 161, 16r

## Patentansprüche

1. Befestigungsvorrichtung (1) zum lösbaren Befestigen eines Gerätes (20) an einem Fahrwagen (30) eines Kanalinspektions- und/oder Wartungssystems, wobei die Befestigungsvorrichtung (1) eine Rückseite (R) und eine Vorderseite (V) aufweist, wobei die Befestigungsvorrichtung (1)
- einen weitgehend senkrecht verlaufenden unteren Abschnitt (10u),
- einen weitgehend senkrecht verlaufenden oberen Abschnitt (10o), und
- einen schräg verlaufenden mittleren Abschnitt (10s) aufweist, wobei
- der mittlere Abschnitt (10s) den unteren Abschnitt (10u) mit dem oberen Abschnitt (10o) verbindet,
- der obere Abschnitt (10o) um einen vorbestimmten Versatz (Δd) relativ zum unteren Abschnitt (10u) nach hinten oder nach vorne versetzt angeordnet ist,
- an der Rückseite (R) und/oder an der Vorderseite (V) des unteren Abschnitts (10u) ein erster Adapter (11u) angeordnet ist, mit dem die Befestigungsvorrichtung unmittelbar oder mittelbar an dem Fahrwagen (30) lösbar befestigbar ist, und
- an der Vorderseite (V) und/oder an der Rückseite (R) des oberen Abschnitts (10o) ein zweiter Adapter (11o) angeordnet ist, an dem das Gerät (20) lösbar an der Befestigungsvorrichtung befestigbar ist.
wobei die Befestigungsvorrichtung mindestens zwei erste Stützstäbe (151; 15r) aufweist, wobei
- der eine erste Stützstab (151) an der linken Seite der Befestigungsvorrichtung über das Profil der Befestigungsvorrichtung hinausragt, und
- der andere erste Stützstab (15r) an der rechten Seite der Befestigungsvorrichtung über das Profil der Befestigungsvorrichtung hinausragt,
**dadurch gekennzeichnet, dass** die Befestigungsvorrichtung mindestens zwei zweite Stützstäbe (161; 16r) aufweist, wobei
- der eine zweite Stützstab (161) an der linken Seite der Befestigungsvorrichtung über das Profil der Befestigungsvorrichtung hinausragt, und
- der andere zweite Stützstab (16r) an der rechten Seite der Befestigungsvorrichtung über das Profil der Befestigungsvorrichtung hinausragt,
wobei die zweiten Stützstäbe (161; 16r) jeweils in einem vorbestimmten vertikalen Abstand (Δs) unterhalb der ersten Stützstäbe (151; 15r) an der Befestigungsvorrichtung angeordnet sind,
wobei die zweiten Stützstäbe (161; 16r) weniger weit über das Profil der Befestigungsvorrichtung hinausragen als die ersten Stützstäbe (151; 15r), und wobei die ersten Stützstäbe (151; 15r) und die zweiten Stützstäbe (161; 16r) in einem bestimmten horizontalen Versatz zueinander angeordnet sind.

2. Befestigungsvorrichtung nach dem vorhergehenden Anspruch, wobei der erste Adapter (11u) und der zweite Adapter (11o) jeweils Anschlüsse (12u; 12o) aufweisen, wobei die Anschlüsse (12u) des ersten Adapters (11u) zu den Anschlüssen (12o) des zweiten Adapters (11o) geführt sind.

3. Befestigungsvorrichtung nach einem der vorhergehenden Ansprüche, wobei die ersten Stützstäbe (151; 15r) und/oder die zweiten Stützstäbe (161; 16r) biegsam ausgestaltet sind und eine vorbestimmte Rückstellkraft aufweisen.

4. Befestigungsvorrichtung nach einem der vorhergehenden Ansprüche, wobei die Befestigungsvorrichtung in einer Leichtbauweise hergestellt ist.

5. Befestigungsvorrichtung nach einem der vorhergehenden Ansprüche, wobei der zweite Adapter (11o) um eine Schwenkachse (DA) von der Vorderseite (V) zur Rückseite (R) des oberen Abschnitts (10o) geschwenkt werden kann, vorzugsweise um mindestens 180°.

6. Befestigungsvorrichtung nach einem der vorhergehenden Ansprüche, wobei das Gerät 20 eine Inspektionseinheit, insbesondere eine Inspektionskamera umfasst.

7. Fahrwagen (30) eines Kanalinspektions- und/oder Wartungssystems mit einer unmittelbar oder mittelbar an dem Fahrwagen lösbar befestigten Befestigungsvorrichtung (1) nach einem der vorhergehenden Ansprüche.

8. Fahrwagen nach dem vorhergehenden Anspruch, wobei dieser eine Anschlusseinheit (31) aufweist, die mit dem ersten Adapter (11u) der Befestigungsvorrichtung (1) korrespondiert, um die Befestigungsvorrichtung (1) an der Anschlusseinheit (31) lösbar zu befestigen.

9. Fahrwagen nach Anspruch 7, wobei dieser eine Hebeeinheit (40) aufweist, an dessen freien Ende ein Anschlussmodul (41) vorgesehen ist, das mit dem ersten Adapter (11u) der Befestigungsvorrichtung (1) korrespondiert, um die Befestigungsvorrichtung (1) an dem Anschlussmodul (41) lösbar zu befestigen.

## Claims

1. Mounting apparatus (1) for detachably mounting a device (20) on a crawler (30) of a canal inspection and/or maintenance system, wherein the mounting apparatus (1) has a rear side (R) and a front side (V), wherein the mounting apparatus (1) comprises
- a largely vertical lower portion (10u),
- a largely vertical upper portion (10o), and
- a sloping middle portion (10s),
wherein
- the middle portion (10s) connects the lower portion (10u) to the upper portion (10o),
- the upper portion (10o) is arranged offset rearwards or forwards by a predetermined offset (Δd) relative to the lower portion (10u),
- a first adapter (11u), by means of which the mounting apparatus is detachably mountable directly or indirectly on the crawler (30), is arranged on the rear side (R) and/or on the front side (V) of the lower portion (10u), and
- a second adapter (11o), on which the device (20) is detachably mountable on the mounting apparatus, is arranged on the front side (V) and/or on the rear side (R) of the upper portion (10o).
wherein the mounting apparatus has at least two first support rods (15l; 15r), wherein
- one first support rod (15l) projects beyond the profile of the mounting apparatus on the left side of the mounting apparatus, and
- the other first support rod (15r) projects beyond the profile of the mounting apparatus on the right side of the mounting apparatus,
**characterized in that** the mounting apparatus has at least two second support rods (16l; 16r), wherein
- one second support rod (16l) projects beyond the profile of the mounting apparatus on the left side of the mounting apparatus, and
- the other second support rod (16r) projects beyond the profile of the mounting apparatus on the right side of the mounting apparatus,
wherein the second support rods (16l; 16r) are each arranged at a predetermined vertical distance (Δs) below the first support rods (15l; 15r) on the mounting apparatus,
wherein the second support rods (16l; 16r) project less beyond the profile of the mounting apparatus than the first support rods (15l; 15r), and
wherein the first support rods (15l; 15r) and the second support rods (16l; 16r) are arranged at a certain horizontal offset with respect to one another.

2. Mounting apparatus according to the preceding claim, wherein the first adapter (11u) and the second adapter (11o) each have connectors (12u; 12o), wherein the connectors (12u) of the first adapter (11u) are routed to the connectors (12o) of the second adapter (11o).

3. Mounting apparatus according to either of the preceding claims, wherein the first support rods (15l; 15r) and/or the second support rods (16l; 16r) are designed to be bendable and have a predetermined restoring force.

4. Mounting apparatus according to any of the preceding claims, wherein the mounting apparatus is produced in a lightweight construction.

5. Mounting apparatus according to any of the preceding claims, wherein the second adapter (11o) can be pivoted about a pivot axis (DA) from the front side (V) to the rear side (R) of the upper portion (10o), preferably by at least 180°.

6. Mounting apparatus according to any of the preceding claims, wherein the device 20 comprises an inspection unit, in particular an inspection camera.

7. Crawler (30) of a canal inspection and/or maintenance system with a mounting apparatus (1) according to any of the preceding claims detachably mounted directly or indirectly on the crawler.

8. Crawler according to the preceding claim, wherein the crawler has a connection unit (31) which corresponds to the first adapter (11u) of the mounting apparatus (1) in order to detachably mount the mounting apparatus (1) on the connection unit (31).

9. Crawler according to claim 7, wherein the crawler has a lifting unit (40), at the free end of which a connection module (41) is provided, which corresponds to the first adapter (11u) of the mounting apparatus (1) in order to detachably mount the mounting apparatus (1) on the connection module (41).

## Revendications

1. Dispositif de fixation (1) pour la fixation de manière amovible d'un appareil (20) sur un chariot (30) d'un système d'inspection et/ou d'entretien de canalisations, dans lequel le dispositif de fixation (1) présente une face arrière (R) et une face avant (V), dans lequel le dispositif de fixation (1) présente
- une section inférieure (10u) s'étendant en grande partie verticalement,
- une section supérieure (10o) s'étendant en grande partie verticalement, et
- une section centrale (10s) s'étendant obliquement
dans lequel
- la section centrale (10s) relie la section inférieure (10u) à la section supérieure (10o),
- la section supérieure (10o) est disposée de manière à être décalée vers l'arrière ou vers l'avant d'un décalage (Δd) prédéterminé par rapport à la section inférieure (10u),
- un premier adaptateur (11u) est disposé au niveau de la face arrière (R) et/ou au niveau de la face avant (V) de la section inférieure (10u), au moyen duquel le dispositif de fixation peut être fixé de manière amovible, directement ou indirectement, au chariot (30), et
- un second adaptateur (11o) est disposé au niveau de la face avant (V) et/ou au niveau de la face arrière (R) de la section supérieure (10o), sur lequel l'appareil (20) peut être fixé de manière amovible au dispositif de fixation,
dans lequel le dispositif de fixation présente au moins deux premières tiges de soutien (15l ; 15r), dans lequel
- l'une première tige de soutien (15l) fait saillie depuis la face gauche du dispositif de fixation, au-delà du profil du dispositif de fixation, et
- l'autre première tige de soutien (15r) fait saillie depuis la face droite du dispositif de fixation, au-delà du profil du dispositif de fixation,
**caractérisé en ce que** le dispositif de fixation présente au moins deux secondes tiges de soutien (16l ; 16r), dans lequel
- l'une seconde tige de soutien (16l) fait saillie depuis la face gauche du dispositif de fixation, au-delà du profil du dispositif de fixation, et
- l'autre seconde tige de soutien (16r) fait saillie depuis la face droite du dispositif de fixation, au-delà du profil du dispositif de fixation,
dans lequel les secondes tiges de soutien (16l ; 16r) sont disposées sur le dispositif de fixation respectivement à une distance verticale (Δs) prédéterminée en dessous des premières tiges de soutien (15l ; 15r),
dans lequel les secondes tiges de soutien (16l ; 16r) font saillie moins largement au-delà du profil du dispositif de fixation que les premières tiges de soutien (15l ; 15r), et
dans lequel les premières tiges de soutien (15l ; 15r) et les secondes tiges de soutien (16l ; 16r) sont disposées avec un décalage horizontal déterminé les unes par rapport aux autres.

2. Dispositif de fixation selon la revendication précédente, dans lequel le premier adaptateur (11u) et le second adaptateur (11o) présentent respectivement des raccords (12u ; 12o), dans lequel les raccords (12u) du premier adaptateur (11u) sont guidés vers les raccords (12o) du second adaptateur (11o).

3. Dispositif de fixation selon l'une des revendications précédentes, dans lequel les premières tiges de soutien (15l ; 15r) et/ou les secondes tiges de soutien (16l ; 16r) sont conçues de manière à être flexibles et présentent une force de rappel prédéterminée.

4. Dispositif de fixation selon l'une des revendications précédentes, dans lequel le dispositif de fixation est fabriqué selon une conception légère.

5. Dispositif de fixation selon l'une des revendications précédentes, dans lequel le second adaptateur (11o) peut pivoter, de préférence d'au moins 180°, autour d'un axe de pivotement (DA) de la face avant (V) vers la face arrière (R) de la section supérieure (10o).

6. Dispositif de fixation selon l'une des revendications précédentes, dans lequel l'appareil (20) comprend une unité d'inspection, en particulier une caméra d'inspection.

7. Chariot (30) d'un système d'inspection et/ou d'entretien de canalisations, comportant un dispositif de fixation (1) selon l'une des revendications précédentes fixé de manière amovible, directement ou indirectement, au chariot.

8. Chariot selon la revendication précédente, dans lequel celui-ci présente une unité de raccordement (31) qui correspond au premier adaptateur (11u) du dispositif de fixation (1), afin de fixer de manière amovible le dispositif de fixation (1) à l'unité de raccordement (31).

9. Chariot selon la revendication 7, dans lequel celui-ci présente une unité de levage (40) à l'extrémité libre de laquelle est prévu un module de raccordement (41) qui correspond au premier adaptateur (11u) du dispositif de fixation (1), afin de fixer de manière amovible le dispositif de fixation (1) au module de raccordement (41).
